Europäisches Patentamt

European Patent Office

Office européen des brevets

(11) Publication number: **0 367 564**
A2

## EUROPEAN PATENT APPLICATION

(21) Application number: 89311240.9

(22) Date of filing: 31.10.89

(51) Int. Cl.5: **F16B 19/00 , F16B 5/06 ,
B25B 31/00 , //F16B19/10,
F16B5/04**

(30) Priority: 31.10.88 GB 8825398

(43) Date of publication of application:
09.05.90 Bulletin 90/19

(84) Designated Contracting States:
DE ES FR GB IT NL SE

(71) Applicant: **Rudge, Keith Roger King
Lower Flat 49 Royal York Crescent
Clifton Bristol BS8 4JS(GB)**

(72) Inventor: **Rudge, Keith Roger King
Lower Flat 49 Royal York Crescent
Clifton Bristol BS8 4JS(GB)**

(74) Representative: **Stuart, Ian Alexander et al
MEWBURN ELLIS 2 Cursitor Street
London EC4A 1BQ(GB)**

(54) Releasable rivet.

(57) A releasable rivet has a head (12) joined to a stem (14) part (19) of which is radially expandable, e.g. being split lengthwise. A passage (16) extends through the head (12) and stem (14). An expander cam member (20) is movable reversibly within the passage (16) between a retracted position in which the stem (14) is not expanded and an advanced position in which the radially expandable part (19) is expanded by the cam member (20). The expander cam member (20) also has means for effecting its displacement, e.g. a through hole (28) to receive slidably a headed pin (30) for causing its axial movement.

Fig 1

## RELEASABLE RIVET

This invention relates to fastening devices for securing articles together in the fashion of rivets. More particularly, it relates to such devices which are readily releasable, and preferably are potentially reusable.

According to the present invention there is provided a releasable rivet comprising a body having a head and a stem extending from the head for passing through a hole in parts to be riveted together; a region of the stem remote from the head being adapted to be radially expandable, whereby said parts are engageable between the head and the expanded region; a passage passing through the head and stem: a cam member movable longitudinally of and at least partially within the passage between an expansion position in which it urges said expandable region of the stem into a radially expanded configuration and a release position in which it allows said expandable region to be in or return to a radially unexpanded configuration said cam member being selectively movable in either direction. In use, there are means engageable with the cam member for moving it from the release position to the expansion position and vice versa. For example, the cam member may have a through passage substantially coaxial with the passage through the stem so that a headed pin can be releasably engaged in the cam member (20) for urging said movement thereof, the pin constituting said means engageable with the cam member. To facilitate expansion of the specified region of the stem, the stem may be split lengthwise, at least in that region. Thus the expansion may involve a plurality of circumferentially disposed tongues (defined by the splits in the stem) bending outwardly from their free ends - which process may be quite easily reversible.

In one form of the invention said region of the stem remote from the head is provided with radial enlargements which form ramp-shaped shoulders facing the head, and in the retracted position of the cam member the stem (which may be split) tapers internally in the direction away from the head. The cam member suitably has an external surface in the region nearer the end of the stem remote from the head, which external surface is of reduced diameter in the direction towards said end of the stem so as to engage the tapering internal surface of the passage in the stem when moving into the advanced, expansion position, thereby camming the stem into the expanded condition. Said reduction in diameter in the external surface of the cam member preferably takes the form of a taper of concave profile. There is preferably also provided a washer adapted to fit over the stem in its non-expanded condition and be retained by said shoulders in the expanded condition of the stem. The washer is preferably bevelled around its inner circumference to co-operate with the ramp shape of the shoulders. A cup may be provided which fits over the head of the engaged rivet, the cup having an apertured base so as to receive slidably a said headed pin, the head of the rivet body having a constriction in its through passage which constriction provides an abutment retaining the cam member in the passage against its withdrawal therefrom in the direction away from the stem.

In another form of the invention, the cam member takes the form of a sleeve with a radially enlarged head external to the stem and providing a ramp-shaped surface facing the end of the stem, whereby longitudinal movement of the sleeve into the stem causes the ramp surface to bear upon the stem, which may have split ends which are thereby forced apart into an expanded condition, in which position the other end of the sleeve projects from the passage in the head of the rivet, the rivet head being provided with angled resilient gripper elements which bear upon the sleeve in that position and allow its further advancement longitudinally in the stem-expanding direction but oppose its return movement into the retracted position, a release element being carried by the head and being movable to lift the gripper elements and thereby release the stem for movement into its retracted position. The head and gripper elements, and optionally also the stem, are preferably of resilient sheet material, a washer preferably being provided around the stem adjacent the head.

In order that the invention may be more clearly understood, embodiments will now be described with reference to the accompanying drawings, wherein:

Fig. 1 shows a longitudinal cross-sectional view through a first embodiment prior to use,

Fig. 2 shows a similar cross-sectional view of the rivet of Fig. 1 in use,

Fig. 3 shows a similar cross-sectional view of the rivet during its withdrawal,

Fig. 4 shows a longitudinal cross-sectional view on the line IV-IV of Fig. 6 of a second embodiment of rivet prior to use,

Fig. 5 shows a longitudinal cross-sectional view on the line V-V of Fig. 6 of the rivet in use,

Fig. 6 shows a plan view of the rivet on the line VI-VI of Fig. 5,

Fig. 7 shows a longitudinal cross-sectional view on the line IV-IV of Fig. 6 of the rivet during its removal,

Fig. 8 shows a cross-sectional view through a device for removing the rivet of Figs. 4 to 7,

Fig. 9 shows a longitudinal cross-sectional view of a third embodiment in use ,

Fig. 10 shows a longitudinal cross-sectional view of a fourth embodiment, and

Fig. 11 shows a longitudinal cross-sectional view of a fifth embodiment.

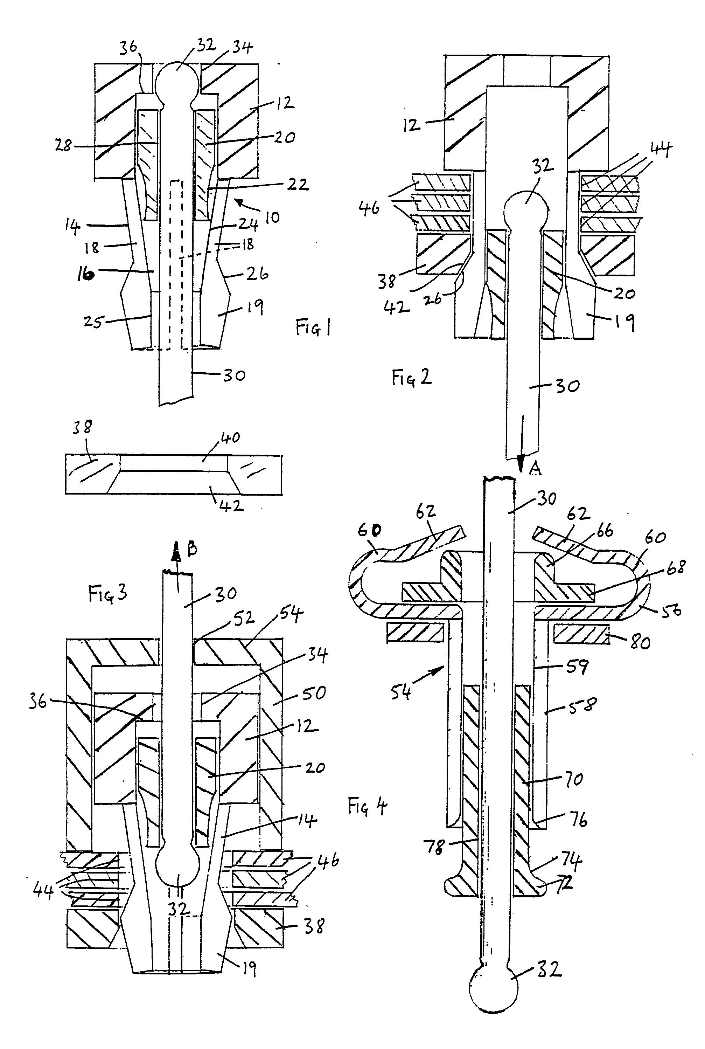

Referring to the drawings, and firstly to Figs. 1 to 3; the first embodiment of rivet comprises a body 10, made of steel or other material suitable for a rivet. The body has a cylindrical head 12, a narrower stem 14 and a longitudinal passage 16 extending through both head and stem. The stem is split lengthwise by four slots 18 so that the end region 19 of the stem remote from the head can be radially expanded. This expansion is brought about by a separate cam member 20 which is longitudinally slidable within the passage 16. The forward end region 22 of the cam member, i.e. the region nearer the end 19 of the stem, is of reduced diameter, preferably of concave profile as shown in the drawings, and bears upon the internal surface 24 of the stem which tapers frusto-conically towards the end 19 when the rivet is in its condition prior to use, as shown in Fig. 1. In this condition, the end portion 25 of the passage 16 within the region 19 of the stem is substantially cylindrical. It will also be seen that the end region 19 of the stem is externally enlarged so as to provide ramp-shaped shoulders 26 facing the head 12. The cam member 20 is also provided with a through passage 28 coaxial with the passage 16, of a diameter suitable to receive slidably the shank of a pin 30, such as is conventionally used in pop-rivets. The head 32 of the pin is of somewhat larger diameter, so that it cannot pass through the passage 28 in the cam member. The passage 16 in the body 10 of the rivet has a restricted diameter opening 34 at the end remote from the stem, so as to provide shoulders 36 retaining the cam member 20 within the passage 16, but of a diameter sufficient to admit the head 32 of the pin 30.

There is preferably also separately provided a washer 38 whose central opening 40 is slightly greater than the diameter of the stem 14 of the rivet where it joins the head 12. Thus, the washer can be introduced over the enlarged end 19 of the stem. The washer is bevelled 42 around its opening 40 at least on the side which will face the ramp-shaped shoulders 26 when the washer is placed on the stem. For convenience in use, so that the washer can be placed either way round on the stem, a similar bevel may be provided also on the other side of the washer.

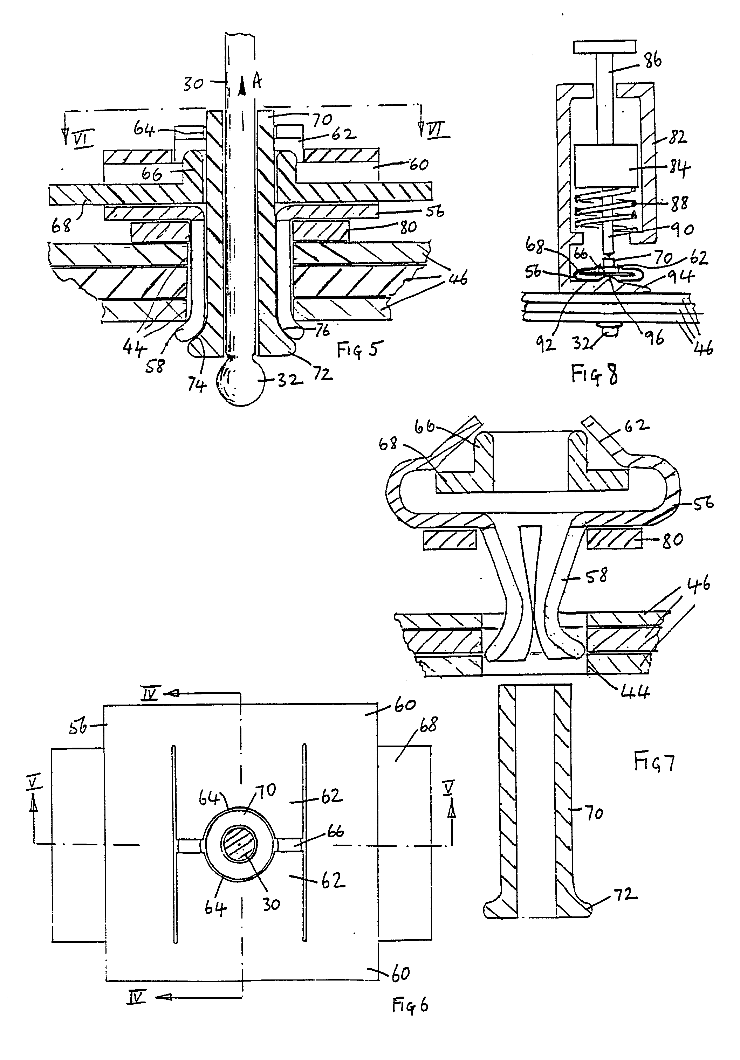

In use, as shown in fig. 2, the stem of the rivet is passed through aligned apertures 44 in components 46 which are to be riveted together, and the washer 38 is placed over the end of the stem.

Then the pin 30, if it is not already in place, is introduced through the rivet, and a conventional riveting tool is applied to the shank of the pin where it emerges from the stem of the rivet, and the pin is drawn by the tool in the direction indicated by the arrow A in Fig. 2. This pulls the cam member 20 lengthwise along the passage 16 towards the end 19 of the stem, causing the leading end portion 22 of the cam member to bear upon the tapering internal surface 24 of the stem, forcing the limbs of the stem apart so that the enlarged region 19 is radially expanded, as shown in Fig. 2. In this position the ramp-shaped shoulders 26 co-operate with the bevelling 42 of the washer 38, thereby tending to urge the washer towards the head, and hence clamp the components 46 together. In this position, the riveting tool can be released, and the pin can then be withdrawn from the rivet in the direction opposite to that of the arrow A.

When it is desired to remove the rivet, the pin 30 is inserted into the rivet in the opposite direction, as shown in Fig. 3. Now the shank of the pin projects through the opening 34 in the head 12, and the riveting tool can be applied at that end to move the pin in the direction indicated by the arrow B, thereby withdrawing the cam member 20 from its advanced position shown in Fig. 2 to its original retracted position shown in Figs. 1 and 3. This allows the split stem to resile from its expanded condition, and the rivet can be withdrawn through the openings in the washer 38 and components 46. To assist in this process, a cup-shaped member 50 may be provided, having an opening 52 in its base 54. The cup is large enough to pass over the head 12 of the rivet, and is of considerably greater depth than the head, and the opening 52 is large enough to admit slidably the shank of the pin 30. This cup is placed over the head of the rivet before the riveting tool is applied to the pin 30, and thereby provide an anvil for the riveting tool, in place of the head 12 of the rivet, so that the rivet is free to move upwards within the cup 50, as indeed it will do when the cam member 20 engages the shoulders 36 in the head 12. Thus, the single action of the riveting tool withdrawing the pin 30 in the direction indicated by the arrow B will not only release the stem 14 of the rivet from its expanded condition, but also withdraw the rivet partially or wholly from the components which it has been connecting.

Referring now to Figs. 4 to 8, and firstly to Figs. 4 and 7; this embodiment of rivet comprises a body 54 having a head 56 and a narrower stem 58 with a through passage 59. The stem is split lengthwise, as in the case of the first embodiment of rivet, so that its end portion remote from the head can be radially expanded. The head 56 is provided with a pair of resilient elements 60 terminating in mutually inwardly directed flanges 62 which are angled somewhat in the direction away from the stem 58. As can best be seen in Fig. 6, the mutually facing edges of the flanges 62 are provided with arcuate cut-outs 64 on a locus of a circle which is of a somewhat smaller diameter than the internal diameter of the stem 58. Within the head 56, beneath the flanges 62, is provided a release member in the form of a collar 66 upstanding from a plate 68. The collar is coaxial with the passage 59 in the stem 58, and of a similar, or preferably somewhat greater, internal diameter. The plate 68 projects on either side from the head 56, as can best be seen in Figs. 5 and 6. A cam member 70 in the form of an elongate sleeve which is slidably insertable into the stem 58, has an enlarged boss 72 at one end, with ramp surfaces 74 matching bevelled surfaces 76 at the end of the stem 58. The internal passage 78 of the sleeve 70 is of a diameter to admit slidably the shank of a pin 30, but not its head 32. The device is also preferably provided with a separate washer 80, around the stem 58 adjacent the head 56, the function of which will be described below.

As shown in Fig. 5; the rivet is used by passing the stem 58 through aligned apertures 44 in components 46 which are to be joined together. Then the cam sleeve 70 is inserted into the stem 58 and the pin 30 inserted into the sleeve 70, as shown in Fig. 4, and a riveting tool applied to the shank of the pin 30 where it projects from the head 56 of the rivet. The riveting tool may be of the conventional kind, but used in association with a cup or bridge which bears upon the plate 68 or the components 46 alongside the rivet, so as to provide a counterabutment. This causes the pin to be drawn longitudinally in the direction indicated by the arrow A in Fig. 5, drawing the cam sleeve 70 with it. The ramp surfaces 74 of the head 72 bearing upon the bevelled surfaces 76 expand the stem 58, as shown in Fig. 5, so as to grip the components 46. At the same time, the other end of the sleeve 70 is being pressed between the arcuate edges 64 of the flanges 62. Since the locus of these edges 64 is normally on a circle of somewhat smaller diameter than the outside diameter of the sleeve 70, the flanges 62 bear resiliently upon the sleeve 70, and because they are angled somewhat in the direction away from the stem 58, the sleeve can move in the direction of the arrow A, but is gripped by the flanges 62 and restrained against withdrawal in the opposite direction. Thus, the sleeve is held by the flanges 62 in the advanced position shown in Fig. 5.

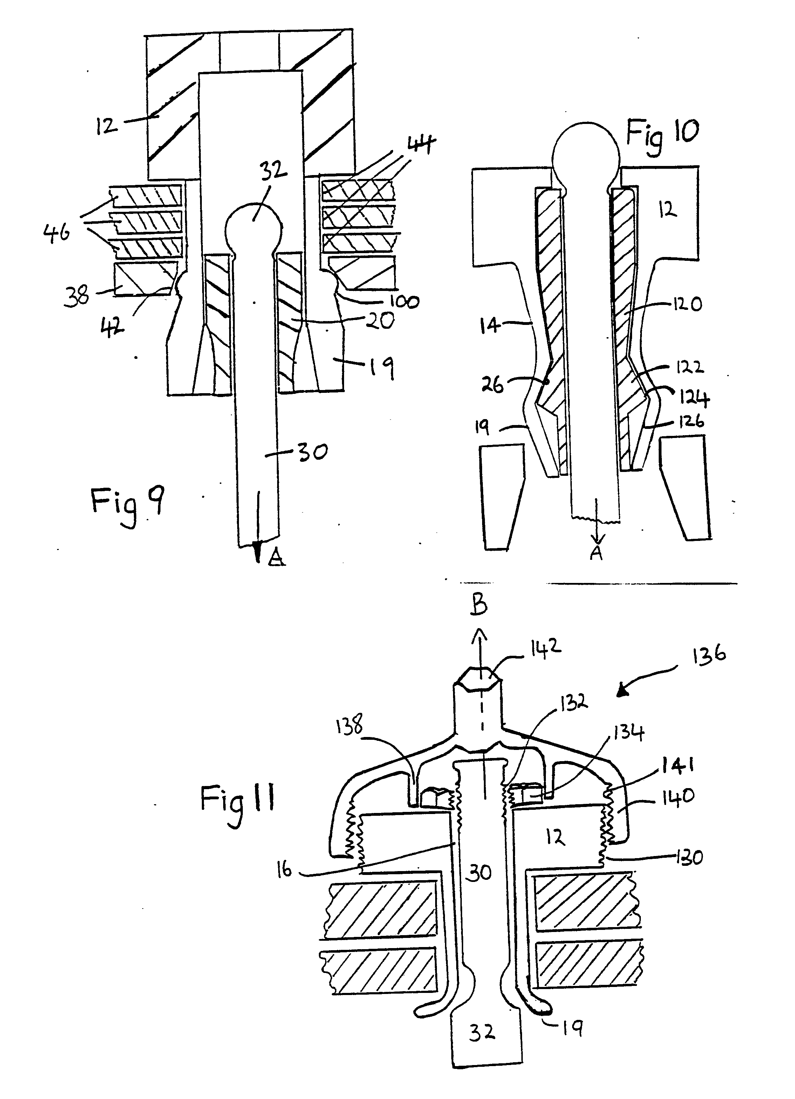

When it is desired to release the rivet, this is effected by lifting the plate 68 so that the collar 66 bears upwardly against the flanges 62, thereby drawing them away from engagement with the sleeve 70, which can then be withdrawn. The body of the rivet can then be withdrawn from the components 46, as shown in Fig. 7. To facilitate this removal, a special device can be provided as shown in Fig. 8. This comprises a cylinder 82 in which is slidably located a piston 84 operated by a plunger 86 against a spring 88. A rod 90 projects from the other end of the piston 84 through an opening in the cylinder 82. That same end of the cylinder is also provided with a pair of feet 92 with chisel-shaped ends 94 and intermediate upstanding ridges 96. In use, the chisel ends 94 of the feet 92 are pressed into the narrow space between the head 56 and the adjacent component 46, this space being provided by the washer 80, until the ridges 96 engage under the projecting ends of plate 68 and lift it and the collar 66, thereby raising the flanges 62 out of engagement with the sleeve 70. The plunger 86 is then depressed, causing the rod 90 to bear downwardly on the sleeve 70 and eject it from the rivet. The advantage of using a tool of this kind is that it is used on the same side as the riveting tool. Thus, it is not necessary to have access for a tool to both sides of the components 46, as is the case with the first embodiment of rivet.

In another form of the invention as shown in Figure 9, the ramped shoulder 26 of the stem end region 19, has an annular bead 100. This annular bead 100 improves the clamping effect on the components 46 when the head 19 is expanded by use of the cam member 20.

In another form of the invention as shown in Figure 10, the separate cam member 120 is in the form of an elongate sleeve which locates within the stem 14. In this embodiment the internal shaping of the rivet stem 14 follows the shaping of the ramp-shaped shoulders 26, and the external surfaces of the cam member 120 are profiled so as to follow closely the internal shaping of the stem 14 of the rivet. Thus, the separate cam member 20 has ramp-shaped shoulders which fit adjacent the ramp-shaped shoulders 26 of the stem 14 and which also face towards the head 12. The shoulders 122 rise to an apex 124.

In use, the separate cam member 120 is drawn through the rivet in the direction indicated by the arrow A in Fig. 10 as previously described for the first embodiment of the present invention. In this way, the apex 124 is brought to bear against the frusto-conically tapering inner surfaces 126 of the end region 19 of the rivet. As the apical part 124 slides down the inner surfaces 126, the end region 19 is radially expanded.

This fourth embodiment offers a number of advantages. Firstly, only a relatively small longitudinally movement of the cam member 120 is needed to cause the radial expansion of the end region 19 of the rivet. This means that only a single operating action of the rivet gun is needed as opposed to two or more actions. Secondly, even when the cam member 120 has been moved to the advanced position to cause radial expansion of the end region 19, a part of the sleeve-like cam member 120 still lies within the rivet adjacent where the cylindrical rivet head joins to the narrower rivet stem 14. In this way the cam-member 120 supports and therefore strengthens that part of the rivet where the head 12 and stem are joined.

Fig. 11 shows another embodiment which differs from the previous embodiments in not employing a removable headed pin. Instead, the cam member 30,32 has a long shank 30 that extends above the head 12 of the rivet. An upper region of this shank has an external thread 132, and the head 12 has an opposite external thread 130. A hexagonal nut 134 is threadedly engaged on the shank's thread 132. A cap member 136 has two annular walls 138,140. The outer wall 140 has an internal thread for engaging the external thread 130 of the head. The inner wall 138 is shaped to engage the nut 134. Thus rotation of the cap in one sense screws the nut down relative to the cam member 30, 32, and screws the cap up relative to the head 12. Thus the cam is pulled rapidly upwardly and its camming portion urges expansion of the expandable end region of the rivet shank 19. The cap 136 may have a portion engageable by a tool to effect rotation, e.g. a hexagonal stem 142 as shown.

Instead of being split, the expandable end region of the rivet shank may be a complete tube of malleable material. This means that the releasing operation (after the cap 136 has been screwed back down on the head) is less easy, since force is required to deform the expanded position back to a size small enough to allow withdrawal.

Whereas various features have been described in connection with particular embodiments, the reader will appreciate that other combinations, and quite different embodiments, are possible.

## Claims

1. A releasable rivet comprising a body (10) having a head (12) and a stem (14) extending from the head (10) for passing through a hole (44) in parts (46) to be riveted together; a region (19) of the stem remote from the head (10) being adapted to be radially expandable, whereby said parts (46) are engageable between the head (10) and the expanded region (19); a passage (16) passing through the head (12) and stem (14); a cam member (20) movable longitudinally of and at least partially within the passage (16) between an expansion position in which it urges said expandable region (19) of the stem into a radially expanded configuration and a release position in which it allows said expandable region (19) to be in or return to a radially unexpanded configuration said cam member being selectively movable in either direction; and means (30;134) engageable with the cam member (20;30) for moving it from the release position to the expansion position and vice versa.

2. A releasable rivet according to claim 1 wherein said cam member (30) has a threaded portion (132) and said means engageable with the cam member for moving it comprises a rotatable complementarily threaded member (134) engageable with said threaded portion.

3. A releasable rivet comprising a body (10) having a head (12) and a stem (14) extending from the head (10) for passing through a hole (44) in parts (46) to be riveted together; a region (19) of the stem remote from the head (10) being adapted to be radially expandable, whereby said parts (46) are engageable between the head (10) and the expanded region (19); a passage (16) passing through the head (12) and stem (14); a cam member (20) movable longitudinally of and at least partially within the passage (16) between an expansion position in which it urges said expandable region (19) of the stem into a radially expanded configuration and a release position in which it allows said expandable region (19) to be in or return to a radially unexpanded configuration said cam member being selectively movable in either direction; the cam member (20) having a through passage (28) substantially coaxial with the passage (16) through the stem so that a headed pin (30) can be releasably engaged in the cam member (20) for urging said movement thereof.

4. A releasable rivet according to any preceding claim wherein the stem (14) is split lengthwise to render said region (19) radially expandable.

5. A releasable rivet according to any preceding claim wherein the expandable region (19) of the stem (14) remote from the head (12) is provided with radial enlargements which form ramp-shaped shoulders (26) facing the head (12) and in the release position of the cam member (20) the split stem tapers internally in the direction away from the head (12).

6. A releasable rivet according to any preceding claim which comprises a washer (38) adapted to fit over the stem (14) in its non-expanded condition and be retained by said shoulders (26) in the expanded condition of the stem (14).

7. A releasable rivet according to claim 5 wherein an inner surface of the rivet stem (14) follows the shaping of the shoulders (26) and the outer surfaces of the cam-member (20) are also provided with a shoulder (122) which can fit closely adjacent the inner surface of the rivet stem (14).

8. A releasable rivet according to any preceding claim wherein the cam member (20) has an external surface in the region nearer the end of the stem remote from the head (12), which external surface is of reduced diameter in the direction towards said end of the stem so as to engage the tapering internal surface of the passage in the stem when moving into the advanced position, thereby camming the stem into the expanded condition.

9. A releasable rivet according to claim 8 wherein the reduction in diameter of the external cam surface takes the form of a taper of concave profile.

10. A releasable rivet according to claim 3 wherein a cup (50) is provided which fits over the head (12) of the engaged rivet, the cup (50) having an apertured (52) base (54) so as to receive slidably a said headed pin (30) the head (12) of the rivet body (10) having a construction in its through passage which constriction provides an abutment retaining the cam member in the passage against its withdrawal therefrom in the direction away from the stem.

11. A releasable rivet according to claim 1 wherein the cam member (70) takes the form of a sleeve with a radially enlarged head (72) external to the stem and providing a ramp-shaped surface (74) facing the end of the stem (58), whereby longitudinal movement of the sleeve into the stem causes the ramp surfaced to bear upon the split ends of the stem and force them apart into an expanded condition, in which position the other end of the sleeve projects from the passage in the head of the rivet, the rivet head being provided with angled resilient gripper elements (60) which bear upon the sleeve in that position and allow its further advancement longitudinally in the stem-expanding direction but oppose its return movement into the release position, a release element (66/68) being carried by the head (56) and being movable to lift the gripper element s(600 and thereby release the stem for movement into its retracted position.

12. A method of releasably connecting components (46) comprising relatively positioning the components (46) so that they have aligned openings (44); positioning the body (109) of a releasable rivet according to any preceding claim so that its head (12) is on one side of the components (46) and its stem (14) extends through the openings (44) so that at least part of its expandable region (19) projects; and displacing the cam member (20) to expand the projecting expandable region (19), whereby the components (46) are clamped between the head (12) and the expanded region (19).

Fig 1

Fig 2

Fig 3

Fig 4

EP 0 367 564 A2

Fig 5

Fig 8

Fig 7

Fig 6

EP 0 367 564 A2

Fig 9

Fig 10

Fig 11